# DEMANDE DE BREVET EUROPEEN

(11) **EP 2 439 093 A1**
(43) Date de publication de la demande: **11.04.2012**
(21) Numéro de dépôt: 11184352.0
(22) Date de dépôt: 07.10.2011
(51) Int. Cl.: B60J 10/00, E06B 5/16

(54) **Joint ignifuge, notamment pour un ouvrant ou baie fixe ou encadrement d'ouvrant ou de baie fixe de véhicule ferroviaire.**

(30) Priorité: 07.10.2010 FR 1003966
(71) Demandeur: Faiveley Transport, 92230 Gennevilliers (FR)
(72) Inventeur: Salles, Olivier, 35133 Lecousse (FR); Koeltz, Frédéric, 37550 Saint Avertin (FR); Montanie, Thierry, 37200 Tours (FR)
(74) Mandataire: Novagraaf Technologies

(57) **Abrégé**

Un joint ignifuge 20A, notamment pour une porte de véhicule ferroviaire, comprend un corps de joint 22A en matériau organique et un écran souple 24A ignifuge fixé sur au moins une surface extérieure du corps de joint 22A. L'écran 24A est réalisé dans un matériau minéral, de préférence du basalte, de préférence constitué par des fibres tissées.

## Description

### DOMAINE TECHNIQUE DE L'INVENTION

L'invention se rapporte à un joint ignifuge pouvant être utilisé dans le domaine ferroviaire comme sur tout autre véhicule. Elle a également trait à un ouvrant ou encadrement d'ouvrant ou de baie fixe équipé d'un tel joint, et plus généralement à un véhicule équipé d'un tel joint, monté soit sur un ouvrant soit sur la caisse du véhicule.

### ETAT DE LA TECHNIQUE ANTERIEURE

Les joints d'ouvrants et de baies fixes pour véhicules ferroviaires sont généralement extrudés et/ou moulés en un seul composant (par ex. en silicone, polychloroprène, EPDM, etc.) avec une certaine tenue à la chaleur, aux flammes et aux fumées. Pour renforcer cette tenue au feu, on peut prévoir dans la masse du joint des additifs retardant la destruction du joint. Les exigences en matière de protection contre le feu et les fumées étant de plus en plus sévères, cette solution s'avère parfois insuffisante.

Dans le document US 5, 011, 163 est proposé un joint ignifuge comprenant un corps de joint en élastomère et une bande souple ignifuge recouvrant le corps de joint, réalisée dans le même élastomère de base que le corps de joint et possédant une concentration en ignifugeant plus élevée que le corps de joint. La bande souple ignifuge étant réalisée dans un matériau élastomère, sa tenue feu/fumée est limitée, et ce malgré ses additifs ignifugeants. De plus, la tenue mécanique de la bande élastomère peut s'avérer insuffisante dans le temps, notamment lorsque le joint est appliqué entre l'ouvrant et le dormant d'une porte d'accès à un véhicule, et de ce fait régulièrement sollicité. On constate alors un défaut d'étanchéité.

Le document DE 10 2007 048 772 divulgue un joint de protection contre le feu et la fumée comprenant une surface de revêtement et une méthode de production d'un tel joint. Le revêtement appliqué sert en premier lieu à réduire le coefficient de frottement du joint, pour réduire les efforts de fermeture de la porte, d'où un effet positif sur la fonction pare-feu de l'ensemble constitué par la porte et la cloison.

### EXPOSE DE L'INVENTION

L'invention vise à remédier aux inconvénients de l'état de la technique et notamment à la faible résistance des joints existants aux attaques du feu et de la chaleur qui peut amener à une dégradation du corps de joint qui perd ainsi toute son efficacité, mais aussi aux problèmes de solidité et d'étanchéité des joints.

Pour ce faire est proposé selon un premier aspect de l'invention un joint ignifuge comprenant un corps de joint en matériau organique et au moins un écran souple ignifuge fixé sur au moins une surface extérieure du corps de joint et réalisé dans un matériau minéral.

Le matériau organique peut notamment être un élastomère qui offre l'élasticité et la tenue mécanique nécessaires à l'utilisation du joint, l'écran fournissant quant à lui la protection aux flammes, et pouvant concourir le cas échéant à la tenue mécanique des parties du joint qu'il recouvre.

L'écran ignifuge peut être disposé sur le corps du joint par co-extrusion, confection, surmoulage, assemblage, collage, pulvérisation ou tout autre procédé, notamment d'adhésion chimique. Il pourra notamment se présenter sous forme de bande.

Selon un mode de réalisation préféré, on prévoit une adhésion chimique entre l'écran et l'élastomère, pour rendre l'adhérence homogène et insensible aux déformations.

L'écran ignifuge est souple, de telle manière qu'il peut être fixé de manière fiable sur tout ou partie de tout corps de joint, et suivre les déformations du corps du joint.

Suivant un mode de réalisation préféré, le matériau minéral est du basalte,

Le basalte présente une structure cristalline spécifique, qui explique le pouvoir mouillant des filaments continus et les bonnes propriétés d'adhérence de la surface de ceux-ci, ce qui est un avantage dans la perspective d'une adhésion chimique de l'écran sur le corps de joint, par exemple par co-extrusion ou après vulcanisation.

Préférentiellement, le matériau minéral est sous forme de filaments, notamment de filaments d'une épaisseur supérieure à 0,2mm, préférentiellement comprise entre 0,3mm et 1 mm.

Il peut s'agir notamment de fibres de basalte, préférentiellement dans les épaisseurs indiquées précédemment. Les fibres de basalte ne se fendent pas sur leur longueur, et sont donc inoffensives pour les passagers, ou lors des opérations de montage ou de démontage.

Préférentiellement, les filaments sont continus et tissés, par exemple par tissage SERGE (twill 1/3, twill 2/2, etc.), tissage biaxial, tissage ATLAS ou tissage "PLAIN", de manière à obtenir une structure souple, solide et homogène..

En alternative à un tissu de basalte, on peut également envisager un tissu de verre ignifugé.

Selon un mode de réalisation, l'écran ignifuge forme une bande continue recouvrant ladite surface extérieure du corps de joint ou partiellement ou totalement insérée dans la matière du corps de joint pour une meilleure solidarisation. L'écran ignifuge se retrouve alors recouvert d'une fine pellicule d'élastomère, qui ne remet pas en cause la protection au feu de l'ensemble du joint.

Le corps de joint comporte préférentiellement une partie d'accroche de manière à pouvoir être fixé sur un support. Cette partie d'accroche est préférentiellement non recouverte par l'écran.

Le corps de joint peut comporter une lèvre d'étanchéité souple. Selon un mode de réalisation, cette lèvre d'étanchéité présente une zone de contact recouverte par l'écran et destinée à venir au contact d'un siège . L'écran confère à la lèvre une meilleure résistance aux flammes mais également au déchirement, à l'abrasion, ou à la rupture en traction. De même, si le corps de joint comporte une surface ou une zone constituant un siège pour une lèvre d'étanchéité d'un autre joint complémentaire, ce siège est préférentiellement pourvu d'écran.

La face de la lèvre d'étanchéité opposée à la zone de contact peut ou non être recouverte par l'écran.

Le support peut notamment être un ouvrant tel qu'une porte, ou une fenêtre, une baie fixe, ou un encadrement d'ouvrant ou de baie fixe. Le support est préférablement pourvu d'une gorge dans laquelle est insérée la partie d'accroche du corps de joint, le joint ayant une partie saillante de la gorge dont la surface extérieure est recouverte intégralement par l'écran ignifuge souple.

Selon une application particulière, le joint peut être appliqué à une porte ou un encadrement d'ouvrant, porte ou fenêtre, de véhicule ferroviaire.

Selon un autre aspect de l'invention, celle-ci a trait à un ouvrant, à une baie fixe ou à un encadrement d'ouvrant ou de baie fixe de véhicule, notamment ferroviaire, incluant un ou plusieurs joints tels que décrits précédemment.

Selon un autre aspect de l'invention, celle-ci a trait à un ouvrant ou encadrement d'ouvrant ou de baie fixe de véhicule ferroviaire, comportant au moins un rebord pourvu d'un joint tel que précédemment décrit, le corps de joint comportant une partie d'accroche de fixation à un support, la partie d'accroche n'étant pas recouverte par l'écran ignifuge, le rebord étant pourvu d'une gorge dans laquelle est insérée la partie d'accroche du corps de joint, le joint présentant une partie extérieure faisant saillie en dehors de la gorge, l'écran du joint recouvrant tout ou partie de la partie extérieure du joint.

Selon un autre aspect de l'invention, celle-ci a trait à un véhicule ferroviaire, équipé d'un joint tel que précédemment décrit, monté sur un ouvrant, une baie fixe ou sur la caisse du véhicule.

### BREVE DESCRIPTION DES FIGURES

D'autres caractéristiques et avantages de l'invention ressortiront à la lecture de la description qui suit, en référence aux figures annexées, qui illustrent :
- la figure 1, une vue de coupe de la jointure entre deux portes d'un véhicule, mettant en oeuvre deux joints selon l'invention ;
- la figure 2 illustre une variante de la figure 1 ;
- la figure 3 illustre une vue en coupe d'un joint périphérique de porte de véhicule.

Pour plus de clarté,les éléments identiques ou similaires sont repérés par des signes de référence identiques sur l'ensemble des figures.

### DESCRIPTION DETAILLEE D'UNMODE DE REALISATION

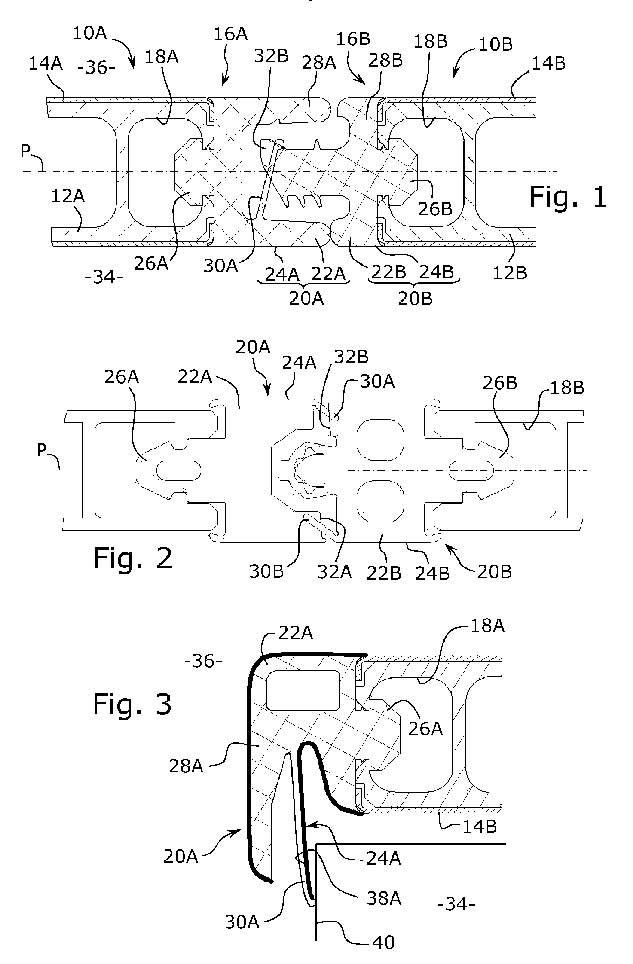

Sur la figure 1 sont représentées en position fermée deux portes 10A, 10B coulissantes ou louvoyantes-coulissantes d'un véhicule, notamment un véhicule ferroviaire. Chaque porte 10A, 10B est constituée d'une âme métallique 12A, 12B recouverte d'une enveloppe 14A, 14B, et présente sur son rebord 16A, 16B faisant face à l'autre porte une gorge 18A, 18B, de préférence continue sur toute la hauteur de la porte, mais qui peut également être interrompue. Chaque porte 10A, 10B est en outre pourvue d'un joint 20A, 20B constitué d'un corps de joint 22A, 22B partiellement recouvert par un écran ignifuge 24A, 24B. Le corps de joint 22A, 22B présente une partie d'accrochage 26A, 26B engagée dans la gorge 18A, 18B et une partie extérieure 28A, 28B faisant saillie hors de la gorge vers l'autre porte. Les joints 20A, 20B des deux portes sont de formes complémentaires. L'un au moins des joints présente une lèvre d'étanchéité 30A déformables venant au contact d'un siège constituée par une face de contact 32B du corps de l'autre joint pour assurer de façon connue la fonction d'étanchéité dans les conditions d'utilisation normale des portes.

L'écran 24A, 24B est constitué, de chaque côté intérieur et extérieur 34, 36 de chaque porte, d'une bande de filaments de basalte tissés, destinée à couvrir en totalité la partie du joint potentiellement exposée au feu.

Les joints 20A, 20B sont de préférence conformés de façon à ce que les écrans 24a, 24B soient en contact l'un avec l'autre, pour assurer une continuité et garantir que la zone de contact 32B entre joints, et notamment la ou les lèvres d'étanchéité 30A, situées entre les écrans intérieurs et extérieurs, soit elles-mêmes protégées des flammes.

Dans l'exemple de réalisation de la figure 1, la lèvre d'étanchéité 30A est située de part et d'autre d'un plan médian P vertical longitudinal du joint, à proximité de celui-ci.

Sur la figure 2 est représentée une variante de réalisation entre deux joints de portes 20A, 20B présentant des lèvres d'étanchéité 30A, 30B situées à proximité des bords intérieur et extérieur des joints, donc plus éloignées du plan médian P et plus vulnérables aux flammes. On prévoit alors un recouvrement partiel de la base de chaque lèvre d'étanchéité 30A, 30B par l'un des écrans 24A, 24B, sans pour autant recouvrir la partie de la lèvre entrant en appui contre le siège 32A, 32B constitué par le corps de l'autre joint.

Sur la figure 3 est représenté un joint 20A périphérique de porte louvoyante de véhicule notamment ferroviaire. Comme dans les modes de réalisation précédents, le corps 22A du joint comporte une partie d'accroche 26A par plots ou nervure en queue d'aronde, et une partie extérieure 28A formant une lèvre d'étanchéité 30A. Un écran 24A en basalte tissé est apposé sur la face 38A de la lèvre d'étanchéité 30A en contact avec la caisse 40 du véhicule. Cet écran ignifuge 24A renforce mécaniquement la lèvre d'étanchéité 30A et améliore sa résistance au déchirement, à l'abrasion, ou à la rupture en traction.

Naturellement, diverses variations sont possibles.

La porte peut le cas échéant être dépourvue d'enveloppe extérieure. La gorge peut être remplacée par des cavités individuelles réparties sur la hauteur de la porte ou par tout autre relief permettant un accrochage du joint. Le joint peut également être collé sur la porte.

Le joint peut être posé sur un ouvrant, une baie fixe ou un encadrement.

## Revendications

1. Joint (20A, 20B) ignifuge comprenant :
- un corps de joint (22A, 22B) en matériau organique,
- au moins un écran souple ignifuge (24A, 24B) fixé sur au moins une surface extérieure du corps de joint,
**caractérisé en ce que** l'écran (24A, 24B) est réalisé dans un matériau minéral.

2. Joint (20A, 20B) ignifuge selon la revendication 1, **caractérisé en ce que** le matériau minéral est du basalte.

3. Joint (20A, 20B) ignifuge selon la revendication 1 ou la revendication 2, **caractérisé en ce que** le matériau minéral est sous forme de filaments.

4. Joint (20A, 20B) ignifuge selon la revendication 3, **caractérisé en ce que** les filaments sont continus et tissés.

5. Joint (20A, 20B) ignifuge selon la revendication 4, **caractérisé en ce que** le matériau minéral est un tissu de verre ignifugé.

6. Joint (20A, 20B) selon l'une quelconque des revendications précédentes, **caractérisé en ce que** l'écran (24A, 24B) forme une bande continue recouvrant ladite surface extérieure du corps de joint (22A, 22B).

7. Joint (20A, 20B) selon l'une quelconque des revendications précédentes **caractérisé en ce que** le matériau organique est un élastomère.

8. Joint (20A, 20B) selon l'une quelconque des revendications précédentes **caractérisé en ce que** l'adhésion entre l'écran (24A, 24B) et le corps de joint (22A, 22B) s'effectue de manière chimique.

9. Joint (20A, 20B) selon l'une quelconque des revendications précédentes **caractérisé en ce que** l'écran (24A, 24B) est au moins partiellement inséré dans la matière du corps de joint (22A, 22B).

10. Joint (20A, 20B) selon l'une quelconque des revendications précédentes **caractérisé en ce que** le corps de joint (22A, 22B) comporte une partie d'accroche de fixation (26A, 26B) à un support, la partie d'accroche (26A, 26B) n'étant pas recouverte par l'écran ignifuge (24A, 24B).

11. Joint (20A, 20B) selon l'une quelconque des revendications précédentes **caractérisé en ce que** le corps de joint (22A, 22B) comporte une lèvre d'étanchéité (30A, 30B) souple.

12. Joint (20A, 20B) selon la revendication 11, caractérisé en ce la lèvre d'étanchéité (30A, 30B) souple présente une zone de contact destinée à venir au contact d'un siège et recouverte par l'écran (24A, 24B).

13. Ouvrant ou encadrement d'ouvrant ou de baie fixe de véhicule ferroviaire, comportant au moins un rebord (16A, 16B) pourvu d'un joint (20A, 20B) selon l'une quelconque des revendications précédentes.

14. Ouvrant ou encadrement d'ouvrant ou de baie fixe de véhicule ferroviaire, comportant au moins un rebord (16A, 16B) pourvu d'un joint (20A, 20B) selon la revendication 10, **caractérisé en ce que** le rebord (16A, 16B) est pourvu d'une gorge (18A, 18B) dans laquelle est insérée la partie d'accroche (26A, 26B) du corps de joint (22A, 22B), le joint présentant une partie extérieure faisant saillie en dehors de la gorge, l'écran du joint (24A, 24B) recouvrant tout ou partie de la partie extérieure du joint.
